(19) Europäisches Patentamt

European Patent Office

Office européen des brevets

(11) **EP 1 212 258 B1**

(12) **EUROPÄISCHE PATENTSCHRIFT**

(45) Veröffentlichungstag und Bekanntmachung des Hinweises auf die Patenterteilung:
**01.10.2003 Patentblatt 2003/40**

(21) Anmeldenummer: **00949245.5**

(22) Anmeldetag: **03.07.2000**

(51) Int Cl.$^7$: **C01B 7/01**

(86) Internationale Anmeldenummer:
**PCT/EP00/06199**

(87) Internationale Veröffentlichungsnummer:
**WO 01/014249 (01.03.2001 Gazette 2001/09)**

(54) **VERFAHREN FÜR EINEN BRENNER UND EINE ENTSPRECHENDE VORRICHTUNG**

METHOD FOR A BURNER AND A CORRESPONDING DEVICE

PROCEDE POUR UN BRULEUR ET UN DISPOSITIF CORRESPONDANT

(84) Benannte Vertragsstaaten:
**AT BE CH CY DE DK ES FI FR GB GR IE IT LI LU MC NL PT SE**

(30) Priorität: **23.08.1999 DE 19939951**

(43) Veröffentlichungstag der Anmeldung:
**12.06.2002 Patentblatt 2002/24**

(73) Patentinhaber:
• **SGL Acotec GmbH**
  **56427 Siershahn (DE)**
• **APL GmbH**
  **91058 Erlangen (DE)**

(72) Erfinder:
• **DURST, Franz**
  **D-91094 Langensendelbach (DE)**
• **KÜNZEL, Jürgen**
  **D-86672 Thierhaupten (DE)**

(74) Vertreter:
**Held, Stephan, Dr.rer.nat., Dipl.-Chem. et al
Meissner, Bolte & Partner
Postfach 86 03 29
81630 München (DE)**

(56) Entgegenhaltungen:
EP-B- 0 657 011          BE-A- 647 753
US-A- 4 468 376          US-A- 4 778 485
US-A- 5 388 985

• PATENT ABSTRACTS OF JAPAN vol. 1998, no. 09, 31. Juli 1998 (1998-07-31) & JP 10 103617 A (OSAKA GAS CO LTD), 21. April 1998 (1998-04-21)
• PATENT ABSTRACTS OF JAPAN vol. 014, no. 097 (M-0940), 22. Februar 1990 (1990-02-22) & JP 01 305288 A (SHINAGAWA REFRACT CO LTD), 8. Dezember 1989 (1989-12-08)

**Beschreibung**

Die Erfindung bezieht sich auf ein Verfahren für einen Brenner zur Verbrennung eines Brennstoff/ Oxidationsmittelgemisches, innerhalb eines Brennraums, in dem ein Material vorgesehen ist, das einer maximalen Temperatur standhält, die kleiner als die Verbrennungstemperatur des Brennstoff/Oxidationsmittelgemisches ist. Die Erfindung bezieht sich ferner auf eine Vorrichtung mit einem Brenner zur Verbrennung eines Brennstoff/Oxidationsmittelgemisches innerhalb eines Brennraums, in dem ein Material vorgesehen ist, das einer maximalen Temperatur standhält, mit einer oder mehreren Zuführungsleitungen für den Brennstoff sowie für das Oxydationsmittel, um sie in den Brennraum einzuleiten. Außerdem betrifft die Erfindung Anwendungen des Verfahrens bzw. Verwendungen der Vorrichtung.

Bei den meisten Brenneranwendungen ist man bestrebt, eine möglichst effektive Verbrennung zu erzielen, unter anderem, damit ein möglichst hoher Wirkungsgrad erreicht werden kann. Die Höhe der Temperatur ist aber üblicherweise durch die Temperaturfestigkeit des verfügbaren Materials für den Brenner begrenzt.

Höhere Temperaturen als es verfügbare Materialien erlauben, treten insbesondere bei starken exothermen chemischen Reaktionen, wie bei der Synthese von Zwischen- oder Endprodukten auf. Solche chemische Reaktionen werden häufig mit frei brennender Flamme durchgeführt, die weit entfernt vom Brennermaterial brennt.

Weiter gibt es bei diesen exothermen chemischen Reaktionen je nach Beschaffenheit der Einsatzstoffe speziell geartete Reaktoren, bestehend aus einer oder mehreren Brennereinheiten und einer Brennkammer. Da die Einsatzstoffe sowie die Produkte jedoch häufig stark toxische sowie korrosive Eigenschaften aufweisen, müssen solche chemische Reaktoren unter Beachtung besonders strenger Sicherheitsanforderungen ausgelegt werden, was für die Auswahl von Material insbesondere eine große Beschränkung bedeutet.

Im Folgenden wird im wesentlichen auf die Chlorwasserstoffsynthese eingegangen, bei der Chlor und Wasserstoff zur Reaktion gebracht werden. Wenn hier häufiger auf die Chlorwasserstoffsynthese eingegangen wird, so ist das jedoch nicht beschränkend, sondern ausschließlich beispielhaft gemeint. Die dargestellten Prinzipien können auf alle ähnlichen Reaktionen, insbesondere solche, bei denen hohe Temperaturen entstehen können, übertragen werden.

Bei der Chlorwasserstoffsynthese ist der Reaktionsraum im Prinzip eine Diffusionsflamme, die sich in einer ausgedehnten Brennkammer befindet. Als Brenner werden relativ einfache, aus korrosionsfesten Werkstoffen hergestellte Vorrichtungen mit einem Innen- und einem Außenrohr verwendet. Durch das innere Rohr, welches oft einen besonders ausgebildeten Brennerkopf aufweist, werden die chlorhaltigen Gase zugeführt. Durch einen zwischen den Rohren freibleibenden Ringspalt werden dagegen die wasserstoffhaltigen Gase eingeleitet, so daß der Wasserstoff die chlorhaltigen Gase praktisch umschließt. Die beiden Gase treten erst unmittelbar nach Austritt aus dem Brenner miteinander in Kontakt, reagieren miteinander und bilden eine lange Flamme, die sich in der Brennkammer ausbreitet.

Die Durchmischung der Reaktanden in der Flamme erfolgt überwiegend durch Diffusion. Wegen der hohen Verbrennungstemperaturen müssen die Wände der Brennerkammer möglichst weit entfernt sein. Außerdem werden diese Wände in den meisten Fällen gekühlt.

Dadurch ergibt sich bei dieser Art der Verbrennung aber ein großer Nachteil, weil die äußeren Bereiche einer solchen Flamme sich durch Wärmeabgabe an die gekühlten Wände so weit abkühlen, daß die Umsetzung der Reaktanden nur noch langsam verläuft oder zum Stillstand kommt. Dadurch befindet sich unter Umstände noch nicht umgesetztes Chlor bei Austritt der heißen Verbrennungsgase aus der Brennkammer im gebildeten Chlorwasserstoff. Der Anteil des nicht umgesetzten Chlors wird deshalb dadurch verringert, daß ein Wasserstoffüberschuß zwischen 5 und 10% zugeleitet wird.

Insbesondere ist es bei derartigen Anwendungsfällen, insbesondere bei der Chlorwasserstoffsynthese, wünschenswert, eine höhere Flammenstabilität zu erzielen. Die üblichen physikalischen Parameter zur Einstellung sind jedoch stark beschränkt. Bei Unterdruck nimmt die Stabilität der Flamme beispielsweise ab, deren Ausdehnung nimmt deutlich zu. Eine Verbrennung bei höheren Drucken ist allerdings bisher nicht üblich Weiter können speziell ausgelegte Vormischbrenner aufgrund der Gefahr eines Flammrückschlages ohne Selbstzündung des Gemisches von Chlor und Wasserstoff nicht eingesetzt werden.

Ein weiteres hier anzusprechendes Gebiet ist die Schadgasentsorgung. Eine übliche Ausführungsform eines chemischen Reaktors zur Schadstoffentsorgung ist eine mit feuerfesten Materialien ausgekleidete heiße Brennkammer, in der die Brenngase mit herkömmlichen Brennern zur Reaktion gebracht werden. Die zu entsorgenden Schadgase werden mit Hilfe einer separaten Zuführung in eine Brennkammer eingebracht. Die Brennkammer ist so bemessen, daß eine gewisse Mindestverweilzeit bei hoher Temperatur für den Ausbrand von Reaktionsgasen vorhanden ist. Solche Vorrichtungen werden vorzugsweise für die Nachverbrennung von chlorhaltigen Verbindungen oder Abgasen eingesetzt. Die Mindestverweilzeit legt die Größe solcher Brennkammern im allgemeinen fest. Allerdings kann diese bei besserer Durchmischung und intensiverer Wärme reduziert werden.

Die oben genannte Diskussion zeigt, daß derartige Anlagen nur bei Einhaltung einer gewissen Mindestgröße gefertigt werden können, also die Anlagen üblicherweise äußerst viel Platz einnehmen. So ist beispielsweise in dem Katalog der Firma SGL-TECHNIK GmbH, Apparatebau, Wemer von Siemens Straße 18, DE-86405 Meitingen, auf Seite 3 ein HCL-Syntheseofen gezeigt, der, wie aus den in derselben Figur gezeigten Personen erkennbar ist, etwa eine Größe von über 10 Metern Länge hat. Diese Länge sollte drastisch reduziert werden können.

Aufgabe der Erfindung ist es, ein Verfahren und eine Vorrichtung der eingangs genannten Art so zu verbessern, daß die so entstehenden Apparate bzw. Brenner weniger Raum einnehmen. Weiter soll auch eine Vorrichtung für dieses Verfahren geschaffen werden, mit der beispielsweise die oben genannten exothermen chemischen Reaktionen unter Verminderung der oben näher beschriebenen Nachteile durchführbar sind.

Die Aufgabe der Erfindung wird ausgehend von dem einleitend genannten Verfahren dadurch gelöst, daß vor Verbrennung ein zusätzliches Gas zugeführt wird, das nicht wesentlich zur Verbrennung beiträgt, wie ein Inertgas oder Wasserdampf oder das Abgas aus der Verbrennung oder einer Nachverbrennung, mit dem die Temperatur wahrend der Verbrennung auf einen Wert unterhalb der maximalen Temperatur herabgesetzt wird. Bei einer Vorrichtung ist diesbezüglich mindestens eine weitere Zuleitung vorgesehen, über die dem Brennraum ein zusätzliches Gas, insbesondere niederen Brennwertes, zuführbar ist, mit dem die Temperatur bei der Verbrennung auf einen Wert unterhalb der maximalen Temperatur absenkbar ist.

Dieser einfache Weg zur Lösung der Aufgabe, nämlich die Temperatur mit Hilfe eines zusätzlichen Gases abzusenken, erscheint zunächst nicht besonders effektiv zu sein. Das Gegenteil wurde aber festgestellt, insbesondere zeigte sich, daß sich eine Anlage aufgrund der Erfindung und ihren entsprechenden Weiterbildungen, beispielsweise zur Chlorwasserstoffsynthese, unter einem Meter Lange herstellen läßt. Dieses Ergebnis, die dramatische Reduzierung der Länge von fast 15m auf kleiner als im, wäre bei der Stellung der Aufgabe gar nicht zu erwarten gewesen.

Sie wäre auch mit herkömmlichen Maßnahmen des Fachmanns, nämlich zur Längenvernngerung mehrere Chlorwasserstoffsynthese-Anlagen niedrigerer Leistung parallel zu schalten, auch gar nicht praktikabel erreichbar gewesen.

Die Erfindung basiert auf der Erkenntnis, daß bei Verringerung der Temperatur über die Zuführung eines zusätzlichen Gases zur Kühlung nicht nur der Aufwand für eine äußere Kühlung stark reduziert ist, sondern auch der Abstand Flamme/Wand wesentlich geringer gehalten werden kann.

Außerdem sind auch andere Brennertypen als der vorher genannte Diffusionsbrenner einsetzbar, die ebenfalls eine weitere Verkürzung ermöglichen. Es ist zu erwarten, daß bei der Chlorwasserstoffsynthese aufgrund der Erfindung auch mit weniger Wasserstoffüberschuß gearbeitet werden kann, da die gemäß Stand der Technik auftretenden Temperaturgradienten wesentlich geringer sind und die Durchmischung besser ist. Dies erhöht die Wirtschaftlichkeit derartiger Anlagen.

Ferner ergibt sich auch der Vorteil, daß aufgrund der Einstellbarkeit der Menge des zugeführten Inertgases, die Temperatur gesteuert oder geregelt werden kann. Diese Möglichkeit läßt sich beispielsweise auch dazu ausnutzen, um die Temperatur bezüglich des Brennstoff/Oxidationsmittelgemisches bezüglich geringster Abgasemissionen zu regeln.

Bei einer bevorzugten Weiterbildung der Vorrichtung ist vorgesehen, daß das Verbrennungsprodukt aus dem Brennraum zumindest teilweise über eine Zuleitung als zusätzliches Gas, mit dem die Temperatur bei der Verbrennung absenkbar ist, eingeleitet ist.

Dann kann nicht nur eine verringerte Temperatur erzielt werden, es erfolgt auch eine Nachverbrennung der Abgase, was den Schadstoffgehalt unter Umständen wesentlich verringert. Weiter ist hervorzuheben, daß keine speziellen besonderen Gase in den Brennraum eingeleitet. werden müssen, da das Abgas immer vorliegen wird. Der Aufwand für eine derartige Vorrichtung wird daher verringert.

Gemäß einer anderen Weiterbildung der Erfindung ist beim Verfahren vorgesehen, daß das Brennstoff/Oxidationsmittelgemisch und das zusätzlich zugeführte Gas zumindest teilweise in einer Vormischeinrichtung gemischt werden, die dem Brenner vorgeschaltet ist. Eine entsprechende Vorrichtung gemäß dieser Weiterbildung ist dadurch gekennzeichnet, daß sie eine Vormischkammer für das Brennstoff/Oxidationsmittelgemisch aufweist, aus der dieses Brennstoff/Oxidationsmittelgemisch in die Brennkammer strömt.

Wie vorstehend schon deutlich wurde, ist eine Vormischkammer bei Vorrichtungen gemäß Stand der Technik gar nicht möglich, da die Brenngase bis zum Auslaß aus den beiden Rohren beabstandet und getrennt geführt werden müssen, da sonst Rücklaggefahr besteht. Im übrigen halten die verfügbaren Metrialien beispielsweise bei der Chlorwasserstoffsynthese bei Rückschlag dem Kontakt mit einer Flamme aufgrund der hohen Temperaturen gar nicht stand. Die hier nun gemäß Weiterbildung eingesetzte Vormischkammer, ermöglicht eine wesentlich bessere Durchmischung und einen effektiveren Umsatz der Reaktanden, was beispielsweise eine Verringerung des benötigten Wasserstoffanteils bei der Chlorwasserstoffsynthese ermöglicht.

Bei Einsatz von herkömmlichen Brennern wäre auch die Selbstentzündung des Chlorwasserstoffgemisches in der Vormischkammer ein Problem. Hier kann aber der Einfluß von UV-Strahlung auf Gas in der Vormischkammer durch deren entsprechende Auslegung verringert werden. Die UV-Strahlung könnte sonst zur Zündung des beispielhaft genannten Gasgemisches aus Chlor und Wasserstoff in der Vormischkammer führen.

Insbesondere ist bei einer vorteilhaften Weiterbildung der Erfindung vorgesehen, daß die Vormischkammer so ausgelegt ist; daß die in Richtung auf den Brennraum bezogene Komponente der Strömungsgeschwindigkeit des Gemisches in der Vormischkammer größer als die Flammengeschwindigkeit im Brennraum ist.

Dadurch wird die Vormischkammer so dimensioniert, daß eine eventuell in der Vormischkammer entstehende Flamme im Fall einer unbeabsichtigten Zündung im gesamten Betriebsbereich, beispielsweise beim Anfahren, ausgeblasen wird.

Insbesondere kann der Vormischkammer auch dabei schon das zusätzliche Gas, mit dem die Verbrennungstemperatur herabsetzbar ist, zugeführt werden, um es mit dem Brennstoff/Oxidationsmittel zu vermischen. Damit wird auch das zusätzliche Gas wirkungsvoll vermischt, wodurch eine effektive Kühlung und eine gleichmäßige Temperatur innerhalb der Flamme erreicht wird.

Gemäß einer anderen Weiterbildung der Erfindung ist vorgesehen, daß die Seitenfläche im Verhältnis zum Volumen der Vormischkammer so groß gewählt ist, daß gegebenenfalls die freie Energie einer Verpuffung von der Seitenwand aufnehmbar ist.

Auch hier läßt sich mit einfachen Mitteln ein großer Sicherheitsstandard erreichen.

Eine weitere diesbezügliche Verbesserung wird bei einer Weiterbildung der Erfindung mittels einer Kühlung der Vormischkammer erreicht.

Festzustellen ist, daß eine Vormischkammer gemäß den obengenannten Weiterbildungen einen Vorteil der Erfindung darstellt, der bei anderen exothermen chemischen Reaktionen bisher aufgrund der dortigen Beschrankung durch die eingesetzte Technik ausgeschlossen war. Zur guten Vermischung der Gase in der Vormischkammer werden die Gase mit hoher Geschwindigkeit, vorzugsweise tangential. eingeblasen. Die Geschwindigkeit des Gasgemisches in axialer Richtung wird über die Flammengeschwindigkeit des Gemisches gewählt. Zur Verbesserung der Durchmischung können in der Vormischkammer Einbauten vorgesehen sein, beispielsweise handelsübliche Mischelemente, wie sie in statischen Mischern verwendet werden. Das. erfindungsgemäß zugeführte inerte Gas, also das zusätzliche Gas zur Erniedrigung von Flammengeschwindigkeit und zum Herabsetzen der adiabatischen Verbrennungstemperatur werden den Hauptreaktionsgasen dabei vorzugsweise vor der Vormischkammer zugemischt, damit lokal innerhalb der Vormischkammer an keiner Stelle wesentlich höhere Flammengeschwindigkeiten als im ideal vorgemischten Gasgemisch auftreten können.

Gemäß einer anderen vorteilhaften Weiterbildung ist vorgesehen, daß in der Brennkammer ein poröses Material mit zusammenhängenden, für eine Flammenentwicklung geeignet großen Hohlräumen vorgesehen ist.

Insbesondere ändert sich die Porosität des porösen Materials mit zusammenhängenden Hohlräumen in Richtung der Flammenentwicklung zu größeren Poren, wobei sich an einer inneren Grenzfläche für die Porengröße eine kritische Peclet-Zahl ergibt, oberhalb der die Flammenentwicklung erfolgt und unterhalb der sie unterdrückt ist.

Ausführungsmöglichkeiten für derartige Porenbrenner, wie sie im folgenden genannt sind, sind in mehreren Beiträgen in der Fachliteratur beschrieben worden, exemplarisch in Durst et al. Bulletin SEVNSE, Band 89, Nr. 21, Seiten 11-18, 1998. Weitere Erläuterungen können auch aus der EP 0 657 011 B1 entnommen werden. Derartige Brenner waren bisher bei der Verbrennung chemisch stark exothermer Reaktionen nicht einsetzbar, da das Material den hohen Temperaturen nicht standhielt.

Die Baugröße solcher Anlagen und Vorrichtungen kann durch den Einsatz von Porenbrennern bei gleichem Durchsatz und Produktqualität erheblich reduziert werden. Weiter wird die mangelhafte Flammenstabilität bekannter Anlagen und Vorrichtungen, die bei Druckschwankungen, insbesondere bei Unterdruck, auftreten, wesentlich verbessert.

Eine Verbrennungsstabilisierung wird durch Zunahme der Porengröße in Strömungsrichtung erreicht, wobei sich in einer Zone des porösen Materials für die Porengröße eine kritische Peclet-Zahl ergibt, oberhalb der die Flammenentwicklung erfolgt und unterhalb der sie unterdrückt ist.

Die Anwendung dieser Technik zur Herstellung von chemischen Produkten, wie beispielsweise Chlorwasserstoff, oder zur Nachverbrennung von Schadgasen, wie beispielsweise chlorhaltigen Gasen, wirkt sich nicht nur auf die Verbrennung selbst vorteilhaft aus, sondern ermöglicht es auch, diejenigen Anlagenteile, in die der Porenbrenner integriert ist, vorteilhaft zu gestalten und anzuordnen.

Bei einem Porenbrenner wird die Reaktion innerhalb einer porösen Matrix aus temperaturbeständigem Material durchgeführt. Abweichend von konventionellen Brennervorrichtungen ist es nicht erforderlich, den Brenner in einer voluminösen Brennkammer anzuordnen oder eine solche nachzuschalten. Aus dem Brenner selbst strömen die heißen Reaktionsprodukte ohne direkte Flammenbildung.

Für die Chlorwasserstoffreaktion sowie weiteren in der chemischen Industrie genutzten chemischen Reaktionen ist ein Porenbrenner herkömmlicher Bauart nicht ohne die erfindungsgemäß eingesetzte Erniedrigung der Flammentemperatur geeignet. Ferner treten im Vergleich zu den bekannten Anwendungen in der Heizungstechnik erheblich höhere Brennraumtemperaturen auf und die Gase sind hochkorrosiv.

Die Dimensionierung von Porenbrennern für chemische Industrieanlagen erfolgt jedoch zunächst nach ähnlichen Regeln, wie sie in der Patentschrift EP 0 657 011 B1 beschrieben wurden, wobei die Péclet-Zahl *Pe* als Kriterium zur Dimensionierung der geschichteten Porengrößen herangezogen wird gemäß:

$$Pe = \frac{S_L d_m C_p \rho_G}{\lambda_G}$$

Dabei ist:

$S_L$     die laminare Verbrennungsgeschwindigkeit der gegebenenfalls vorgemischten Gase;

$d_m$     der effektive Porendurchmesser;

$\lambda_f$     die Wärmeleitung des Gasgemisches;

$\rho_f$     die Dichte des Gasgemisches und

$c_p$     die spezifische Wärmekapazität des Gasgemisches.

Das brennbare Gasgemisch durchströmt zunächst eine Region, im folgenden mit Zone A bezeichnet, die durch derart kleine effektive Porendurchmesser gekennzeichnet ist, daß keine stationäre Flammenausbreitung möglich ist, d.h. die erste poröse Zone ist einer Flammenrückschlagsperre wirkungsmäßig ähnlich. Die nachfolgende eigentliche Verbrennungsregion, im folgenden als Zone C bezeichnet, weist jedoch Porengrößen auf, die groß genug sind, um eine stationäre Verbrennung zuzulassen. Als Kriterium für die Flammenausbreitung im Inneren einer porösen Matrix wird in der Fachliteratur (beispielsweise Babkin et. al. in Combustion and Flame Vol 87, S. 182-190, 1991) eine kritische Peclet-Zahl von *Pe* > 65 angegeben.

In der EP 0 657 011 B1 wird vorgeschlagen, für die erste Zone eine deutlich niedrigere und für die Verbrennungszone eine deutlich höhere als die kritische Peclet-Zahl von Pe=65 zu verwenden.

Wird der Porenbrenner gezündet, so stabilisiert sich die Verbrennung an der Schnittstelle zwischen den zwei Zonen. Durch die kleinen Porenabmessungen in der ersten Zone kommt es in dieser Region im stationären Zustand nicht zu einer Verbrennung sondern lediglich zu einer Vorwärmung des Gasgemisches. Diese Eigenschaft erfüllt auch die strengen Sicherheitsanforderungen bezüglich einer Rückzündungsgefahr bei chemischen Anlagen.

Aufgrund der exzellenten Wärmeübertragung zwischen Gas- und Festkörperphase innerhalb der porösen Matrix stehen diese annähernd in thermischem Gleichgewicht. Das annähernd thermische Gleichgewicht zwischen Gas- und Festkörperphase und die intensive Vermischung innerhalb des Porenkörpers bewirkt wesentlich das Verschwinden von freien Flammen in der mit größeren Poren ausgestatteten Brennzone. Der Verbrennungsprozeß vollzieht sich nun in einem ausgedehnten Reaktionsgebiet, das eher als Verbrennungsreaktor denn als Brennraum mit freien Flammen charakterisiert werden kann.

Als poröse Brennraumfüllung von Porenbrennern für chemische Industrieanlagen können Materialien wie z.B. Aluminiumoxid, Zirkonoxid, Siliziumkarbid, Graphit, Kohlenstoff u.a. verwendet werden, die neben hoher Temperaturbeständigkeit auch eine ausreichende Korrosionsbeständigkeit aufweisen. Vorzugsweise, obwohl auch Schaum- oder Wabenstrukturen einsetzbar sind, verwendet man zur Herstellung des porösen Brennraumes Schüttungen aus temperaturbeständigen keramischen Kugeln, Sattelkörpern und ähnlichen Körpern, wie sie beispielsweise als ungeordnete Packung für thermische Trennverfahren verwendet werden Schüttungen werden deshalb bevorzugt, weil sie eine einfache Reinigung gegen Ablagerungen, beispielsweise bei der Chlorwasserstoffsynthese entstehende Salzrückstände ermöglichen, die aus den Brenngasen stammen, weil diese unter Umständen salzbeladene Flüssigkeitströpfchen mit sich führen können. Auch für Porenbrenner werden zur Erzeugung von Chlorwasserstoff Zonen unterschiedlicher Porenstruktur bzw. -größe gemäß EP 0 657 011 B1 angeordnet. Dies geschieht durch die Verwendung unterschiedlich großer Füllkörper für die Zonen A und C.

Abweichend von der in der EP 0 657 011 B1 beschriebenen Ausführung kann jedoch zwischen den mit Füllkörpern ausgebildeten porösen Strukturen der zwei Zonen mit unterschiedlicher Porengröße vorzugsweise ein weiterer Rost angeordnet werden, weicher den Austrag kleinerer Füllkörper der Zone A in die Zwischenräume der größeren Füllkörper der Zone C verhindert. Auch am Gasaustritt aus der Zone C wird bei Brennern, bei denen die Gase nicht senkrecht nach oben austreten, ein weiterer, gasdurchlässiger Rost angeordnet werden, welcher den Brennraum abschließt. Dadurch wird es möglich, den Brenner trotz loser Schüttung der Füllkorper im Brennraum in beliebiger Lage anzuordnen.

Der poröse Reaktionsraum ist bevorzugt von einer korrosionsfesten, gekühlten Wand umgeben, die beispielsweise aus kunstharzimprägniertem Graphit besteht. Die Kühlung kann durch Kühlwasser, Luft oder die Brenngase selbst erfolgen. Zwischen der gekühlten Wand und dem Brennraum befindet sich dann vorzugsweise eine isolierende Zwischenschicht aus hochtemperaturbeständigen, korrosionsbeständigen und thermisch isolierenden Werkstoffen, welche Wärmeverluste verhindert und sicherstellt, daß im Brennraum an jeder Stelle die gewünschte Brennraumtemperatur herrscht. Abweichend von der EP 0 657 011 B1 wird durch diese starke Isolierung eine nahezu adiabate Prozeßführung ermöglicht, bei der kein Temperatureinfluß durch die gekühlte Wand auf den Verbrennungsprozeß erfolgt. Die adiabate Prozeßführung erlaubt beispielsweise ein einfaches Scale-up solcher chemischen Reaktoren, da die Wärmetransporteigenschaften zu den gekühlten Wänden irrelevant sind und der gesamte Prozeß in Strömungsrichtung nahezu eindimensional betrachtet werden kann.

Die adiabatische Verbrennungstemperatur von mehreren chemischen Reaktionen, wie bei Wasserstoff- und Chlorreaktionen, liegt über 2500°C. Übliche, hinreichend korrosionsbeständige keramische Materialien für die Füllung des Brennraums halten diesen hohen Temperaturen nicht stand. Die erfindungsgemäß vorgeschlagene Maßnahme löst das Problem der zu hohen Brennraumtemperatur durch Zuführung eines weiteren Gases bzw. Dampfes. Demgemäß wird zu dem Brenngasgemisch in der Vormischkammer oder zu jedem der Brenngase ein weiterer Gasstrom zugemischt. Dieser Gasstrom kann beispielsweise ein Teilstrom des Reaktionsproduktes, z.B. Chlorwasserstoff, aus einem anderen Teil der verfahrenstechnischen Anlage, sein. Es kann auch Wasserdampf oder ein anderes vorzugsweise bezüglich der nachfolgenden Reaktion inertes Gas verwendet werden, welches es ermöglicht, die Brennraumtemperatur auf das gewünschte Niveau zu senken. Die Absenkung der Verbrennungstemperatur ist um so wichtiger, als die Wärmezufuhr bei Porenbrennern, die für hohe Leistungen dimensioniert werden, aufgrund der gekühlten Wand eine untergeordnete Rolle spielt Durch das Rückführ- bzw. Fremdgas wird die Flammengeschwindigkeit darüber hinaus herabgesetzt, so daß die Verbrennung im gesamten Leistungsbereich nur in der Zone C des Porenbrenners stattfinden kann. Besonders vorteilhaft ist die Rückführung des Reaktionsprodukts, da die Abgasmenge der Anlage dadurch nicht erhöht wird. Auch Wasserdampf ist in dieser Hinsicht vorteilhaft, weil Wasserdampf in den nachfolgenden Einrichtungen zur Erzeugung von Endprodukten, wie beispielsweise Salzsäure, des öfteren kondensiert werden kann. Oft enthalten die Hauptreaktanden wie Wasserstoff und Chlor, wenn sie beispielsweise aus chemischen Umsetzungen in verfahrenstechnischen Anlagen stammen, so hohe Anteile von Fremdgasen, daß sich ein Zusatz von weiteren Fremd- oder Rückführgasen erübrigt bzw. aus regeltechnischen Gründen nur so viel zugeführt werden muß, daß die Reaktion bei der gewünschten Temperatur stabilisiert wird.

Abweichend von üblichen Brennerausführungen für chemische Anlagen, wie bei Chlorwasserstoffsynthesen, bei denen die Vermischung der Brenngase außerhalb des Brenners und innerhalb der Brennkammer erfolgt, werden die Brenngase bei der hier beschriebenen Vorrichtung vorgemischt. Abweichend von der EP 0 651 011 B1 ist die Vormischkammer vorzugsweiser Bestandteil und sicherheitsrelevante Komponente einer erfindungsgemäßen Vorrichtung.

Die Vormischkammer ist vorzugsweise aus korrosionsfesten Werkstoffen, z.B. aus kunstharzimprägniertem Graphit hergestellt. Aus der Vormischkammer treten die vorgemischten Gase bevorzugt durch einen Rost aus korrosionsbeständigem Material, beispielsweise Siliziumkarbid, Aluminiumoxid o.a., in die Zone A des Porenbrenners ein. Wie vorher schon angesprochen wurde, neigen mehrere chemische Reaktanden wie z.B. Chlor und Wasserstoff unter dem Einfluß von UV-Strahlung zur Selbstentzündung. Die Selbstentzündung in der Vormischkammer sollte aber aus Sicherheitsgründen vermieden werden. Ein Rost geeigneter Gestaltung und eine entsprechende Auslegung der Zone A wird so gewählt, daß von der Zone A bzw. C keine oder nur sehr wenig UV-Strahlung in die Vormischkammer gelangt, die zur Zündung des Gasgemisches aus Chlor und Wasserstoff in die Vormischkammer führen könnte.

Besonders ist die Stabilität der Verbrennung bei dem beschriebenen Porenbrenner hervorzuheben. Gegenüber den nach dem Stand der Technik ausgeführten Chlorwasserstoffbrennern, die sehr empfindlich auf Druck- und Mengenschwankungen der Gase reagieren, bei denen also die Flamme leicht erlöschen kann, wird die Verbrennungsreaktion im Porenbrenner dagegen durch die Wärmekapazität der Füllkörper in Zone C sogar bei kurzzeitigem Ausfall der Gase sofort wieder gezündet. Aus Sicherheitsgründen ist es jedoch zweckmäßig, bei Ausfall eines der Gase auch das andere Gas abzustellen und eine Inertgasspülung anzuschließen. Selbst nach mehreren Minuten kann der Brenner dann ohne erneute Anfahrprozedur auch nach einer Inertgasspülung verzögerungsfrei wieder In Betrieb genommen werden.

Die Zündung und Vorwärmung des Brenners kann mit einem Brenngas (Wasserstoff, Methan o.a.) und Luft erfolgen. Allerdings kann hierfür auch eine konventionelle Zündvorrichtung, die für solche chemischen Reaktoren üblich ist, genutzt werden. Nach völliger Durchwärmung der Zone C kann nach und nach oder auch sofort auf die Reaktanden, wie beispielsweise Chlor und Wasserstoff, umgestellt werden.

Für den Fall der Chlorwasserstoffsynthese und einer Vorwärmung mit einer Wasserstoff/Luftflamme erfolgt eine vorteilhafte Regelung in der Art, daß der Anteil der Luft langsam vermindert und der Chloranteil in gleichem Maße erhöht wird bis die Luft ganz durch Chlor ersetzt ist.

Plötzliche Lastschwankungen zwischen 50 und 120% der Nennlast, die in solchen Anlagen auftreten können, sind mit den beschriebenen Porenbrennern ohne Schwiengkeiten zu beherrschen.

Die hervorragende Stabilität der Verbrennungsreaktion im Porenbrenner ermöglicht den Einsatz des Brenners unter Druck oder unter Unterdruck, was nach dem Stand der Technik mit hinreichender Verfahrenssicherheit aufgrund der instabilen Flammen, insbesondere bei der Synthese von Chlorwasserstoff bisher nicht durchgeführt wurde. Für höhere Leistungen können Porenbrenner mit entsprechend größerer Querschnittsfläche ausgerüstet oder in beliebiger Zahl parallel geschaltet werden. Eine solche Anordnung von vielen kleinen Brennern erhöht den Leistungsbereich einer Chlorwasserstoffsyntheseanlage erheblich, da dabei je nach Leistungsanforderung Brenner zu- oder abgeschaltet werden können. Auf diese Weise läßt sich die Gesamtanordnung stets im optimalen Leistungsbereich betreiben. Ebenso ist es abweichend von den hier dargestellten Beispielen möglich, Brenner als Linienbrenner oder Ringbrenner auszuführen. Innerhalb der Brennräume erhält man dann nahezu gleichbleibende Bedingungen.

Das Scale-up für technische Anlagen wird aufgrund der technischen Lehre für die Dimensionierung von Porenbrennem, insbesondere bei der im vorherigen beschriebenen adiabaten Prozeßführung, nach der unabhängig von der Baugröße definierte Strömungsbedingungen in den Zonen A und C eingehalten werden müssen, überraschend einfach.

Die nachfolgend beschriebenen und für chemischen Prozesse modifizierten Porenbrenner sind Teile verfahrenstechnischer Anlagen zur Erzeugung von Salzsäure oder zur Nachverbrennung chlorhaltiger Verbindungen.

Eine solche Anlage weist beispielsweise einen modifizierten Porenbrenner, einen Wärmetauscher für die Kühlung der Reaktionsprodukte bzw. zur Nutzung von deren Wärmeinhalt und je nach Anlagetyp auch einen Absorber, Scrubber oder Abgaswäscher an Übergangsstücken zwischen den Apparaten, Pumpen, Rohrleitungen und die üblichen Sicherheits-, Meß- und Regeleinrichtungen auf. Aufgrund der Reaktionsführung und der guten Durchmischung von Gasen im Porenbrenner ist im Vergleich zum Stand der Technik eine voluminöse Brennkammer nicht erforderlich. Der Brenner kann direkt an die nachfolgenden Apparate, z.B einen Wärmetauscher, eine Quenche mit Absorber oder andere Apparate angeschlossen werden. Nach Abkühlung der aus dem Brenner strömenden Reaktionsprodukte in einem Wärmetauscher oder nach einer Quenche wird ein Teilstrom des gekühlten Gases bzw. Gasgemisches, wie oben beschrieben, wieder dem Brenner zugeführt. Alternativ dazu kann, wie beschrieben, auch ein anderes Gas, z.B. Wasserdampf zugesetzt werden.

Je nach Anforderungen an das Produkt können auch nur Teile der verfahrenstechnischen Anlage benötigt werden, z.B. Brenner und Gaskühler oder Brenner und Quenche, je nachdem, ob das Produkt gasförmig oder in Wasser gelöst als Salzsäure benötigt wird.

Eine weitere Ausführungsform einer Anlage zur Erzeugung von Chlorwasserstoff benutzt als Wasserstofflieferant Kohlenwassertoffgase, z.B. Erdgas, Methan, Propan usw., Chlor und Luft. Die Verbrennung erfolgt nach den stark vereinfacht dargestellten Reaktionsgleichungen (1 und 2)

$$(1) \qquad CH_4 + O_2 + Cl_2 - - \triangleright CO + 2HCl + H_2O$$

$$(2) \qquad CO + 1/2\,O_2 - - - - \triangleright CO_2$$

Diese Verbrennung ist in Anlagen gemäß Stand der Technik schwierig zu führen, da bei ungünstigen Randbedingungen Ruß entstehen kann, der die Anlage und die Säure verschmutzt. Die beschriebenen besonderen Eigenschaften des Porenbrenners ermöglichen unerwarteterweise auch für diese kritische Anwendung eine stabile, rußfreie Verbrennung.

Porenbrenner für die Nachverbrennung von halogenhaltigen Abgasen oder verdampfbaren oder gasförmigen halogenhaltigen organischen Verbindungen werden, wie später anhand von Ausführungsbeispielen noch deutlicher wird, so ausgeführt, daß Oxidationsmittel und Brenngas vorzugsweise vorgemischt in die Vormischkammer eingeblasen werden. Durch die hohe Reaktionsenthalpie von Oxidationsmittel und Brenngas wird in der Brennzone C eine stabile Stützflamme erzeugt. Das nachzuverbrennende Gas oder Gasgemisch wird über ein Einleitrohr in die Vormischkammer vorzugsweise über einen Rost von der Zone A des Porenbrenners eingeblasen und mit dem Brennstoff/Oxidationsmittelgemisch gemischt. Zur Temperaturregelung des Nachverbrennungsprozesses verwendet man vorzugsweise einen entsprechenden Überschuß des Oxidationsmittels, insbesondere Luft. Zur Regelung der Temperatur in der Zone C des Porenbrenners wird die Temperatur beispielsweise mittels Infrarotpyrometer gemessen und das Signal für die Oxidationsmittelregelung weiterverarbeitet. Die nachfolgenden Einrichtungen bei Nachverbrennungen unterscheiden sich abhängig vom Halogengehalt der Abgase von den oben beschriebenen Anlageteilen. Bei kleinem Halogengehalt, bei dem die Gewinnung von Salzsäure nicht im Vordergrund steht, wird im allgemeinen nur eine Quenche und ein Wäscher nachgeschaltet. Andere Begleitstoffe, z.B. Schwefelverbindungen o.a., können mit den beschriebenen Einrichtungen ebenso einer schadlosen Beseitigung unterzogen werden. $D_a$ die beschriebenen Nachverbrennungsanlagen mit Porenbrenner keine Brennkammer im herkömmlichen Sinn benötigen, können solche Anlagen sehr kompakt und kostengünstig ausgeführt werden.

Aufgrund der vorstehenden detaillierten Ausführungen ergeben sich insbesondere folgende bevorzugte Weiterbildungen der Erfindung:

- der Brennraum weist mindestens zwei Zonen mit Material unterschiedlicher Porengröße auf, zwischen denen die Porengröße die kritische Peclet-Zahl ergibt;

- das Material mit zusammenhängenden Hohlräumen weist zumindest teilweise eine Schüttung von Körpern auf, wie sie für Festkörperschüttungen oder geordnete Packungen bei thermischen Trennverfahren eingesetzt werden, wie Kugeln oder Sattelkörper;

- an der Grenzfläche für Zonen unterschiedlicher Porösität ist ein Gitter, wie ein Rost, vorgesehen, um einen Austrag der Körper aus einer Zone in die andere zu vermeiden, wobei das Gitter, insbesondere der Rost auch gekühlt sein kann;

- die Brennkammer ist für Flammenstabilität bei Über- und Unterdruck ausgelegt.

Die Brennkammer kann nun auch für Flammenstabilität bei Über- oder Unterdruck ausgelegt werden, was im vorbekannten Stand der Technik nur zur ungenügender Flammenstabilität geführt hätte. Aufgrund der Erfindung und ihrer Weiterbildungen steht aber ein wesentlich größerer Druckbereich zur Verfügung, so daß eine entsprechende Auslegung für einen großen Druckbereich in einer dem Fachmann geläufigen Weise, insbesondere auch für Über- oder Unterdruck, zu einer wesentlichen Erhöhung der Flammenstabilität führen kann. Regelungen können dabei weitgehend entfallen.

Insbesondere ist bei einer bevorzugten Weiterbildung der Erfindung eine Brennkammerisolierung für eine annähernd adiabatische Verbrennungsführung ohne Wandeffekte vorgesehen. Eine adiabatische Verbrennungsführung ist insbesondere für die Erhöhung der Umsatzrate besonders vorteilhaft. Eine derartige adiabatische Verbrennungsführung ohne Wandeffekte war nachteiligerweise bei den vorangehend genannten Brennern überhaupt nicht möglich.

Neben der Verbrennung ist es auch möglich, Reaktionsprodukte zu gewinnen, beispielsweise bei der Chlorwasserstoffgasverbrennung zur Chlorwasserstoffsynthese. Dazu ist bei einer bevorzugten Weiterbildung der Erfindung vorgesehen, daß die Vorrichtung eine Einrichtung zur Gewinnung oder Trennung von Reaktionsprodukten aus dem verbrannten Brennstoff/Oxidationsmittel aufweist. Insbesondere für die Chlorwasserstoffsynthese ist vorgesehen, daß die Vorrichtung für eine chlorhaltige Verbindung im Brennstoff sowie Wasserstoff im Oxidationsmittet zum Verbrennen des Chlorwasserstoffs ausgelegt ist und dafür eine verfahrenstechnische Einrichtung zur Gewinnung von Chlorwasserstoff oder Salzsäure hinter dem Brennraum aufweist. Die genannte Auslegung ist dem Fachmann bekannt. Insbesondere ist dabei anzumerken, daß die entsprechenden Sicherheitseinrichtungen berücksichtigt werden und die Materialien entsprechend korrosionsbeständig gegen Chlor sind.

Wie vorstehend schon ausgeführt wurde, ist die Erfindung nicht nur zum Verbrennen und zur Chlorwasserstoffsynthese einsetzbar, sondern auch als Einrichtung zum Nachverbrennen von Abgasen und dabei insbesondere zum Reinigen. So ist es beispielsweise bei einigen in den in der nachfolgenden Beschreibung dargestellten Ausführungsbeispielen möglich, Anteile an chlorhaltigen organischen Verbindungen problemlos nachzuverbrennen und somit schadlos zu entsorgen.

Weitere Maßnahmen und Besonderheiten bei der Erfindung ergeben sich auch aus der nachfolgenden Beschreibung von Ausführungsbeispielen unter Bezugnahme auf die beigefügte Zeichnung. Es zeigen:

Fig.1 einen Porenbrenner aus kunstharzimprägniertem Graphit mit Bohrungen für eine Wasserkühlung des Graphitmantels;

Fig. 1a einen Ausschnitt des Porenbrenners nach Fig 1. jedoch mit statischen Mischelementen in der Vormischkammer;

Fig. 2 einen Porenbrenner wie Fig. 1 jedoch ohne Vormischkammer;

Fig. 2a einen Ausschnitt durch die Zone A des Brenners gemäß Fig. 2 zur Veranschaulichung der Mischung;

Fig.3 einen Porenbrenner nach Fig. 1 mit Mantelkühlung durch das Brenngas und einer geordneten Pakkung als Brennraumfüllung;

Fig. 4 einen Porenbrenner mit einem Kühlmantel aus Stahl;

Fig. 4a einen Schnitt durch die Vormischkammer mit tangentialen Eintrittsstutzen für die Gase;

Fig. 5 einen Porenbrenner zur Nachverbrennung von Abgasen mittels eines Brenngas/Luft-Gemisches;

Fig. 6 eine verfahrenstechnische Anlage zur Erzeugung von Salzsäure mit Porenbrenner, Wärmetauscher, Absorber, Scrubber und Produktrückführung;

Fig. 7 eine verfahrenstechnische Anlage zur Nachverbrennung von chlorhaltigen oder chlorkohlenwasserstoffhaltigen Abgasen mit Porenbrenner, Quenche und Wäscher.

Für die folgenden Ausführungsbeispiele wurde insbesondere eine spezieffe Brennerart ausgewählt, der vorstehend schon näher erläuterte Porenbrenner 1, der gegenüber anderen Brennertypen, mit dem die Erfindung ausgebildet werden kann, besondere Vorteile aufweist. Das wesentliche Merkmal bei der Erfindung besteht darin, daß die Flamme durch Zufuhr eines zusätzlichen Gases zu dem Brennstoff/Oxidationsmittelgemisch gekühlt wird, was bei allen denkbaren Brennertypen verwirklicht werden kann. Deshalb ist die nachfolgende Beschreibung von Ausführungsbeispielen allein auf Basis von Porenbrennern 1 nicht als Beschränkung zu sehen.

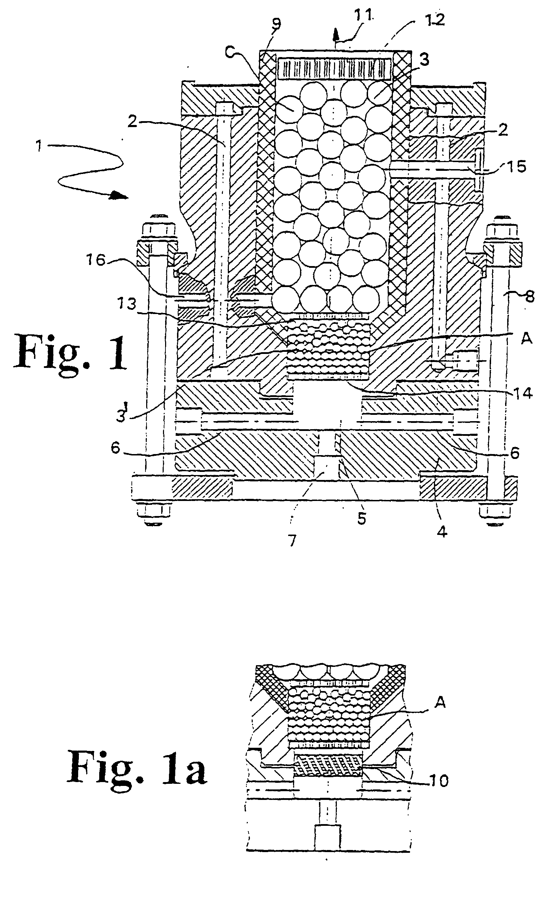

Eine allgemeine Ausführungsform eines Porenbrenners 1 für chemische Prozesse ist in Fig. 1 dargestellt. Das Gehause des Porenbrenriers 1 besteht aus kunstharzimprägniertem Graphit und ist von Kühlkanälen 2 durchzogen, über die Kühlmittel, beispielsweise Kühlwasser, geleitet wird. Weiter sind zwei durch kugelförmigen Füllkörper definierte Zonen A und C gezeigt. Die Zone C wirkt dabei als Verbrennungszone, in der sich die Flamme entwickelt. In der Zone A wird durch entsprechende Dimensionierung ein Entflammen vermieden. Die Verbrennungszone C ist zu diesem Zweck mit größeren kugelförmigen Füllkörpern 3, die Zone A dagegen mit kleineren kugelförmigen Füllkörpern 3' gefüllt.

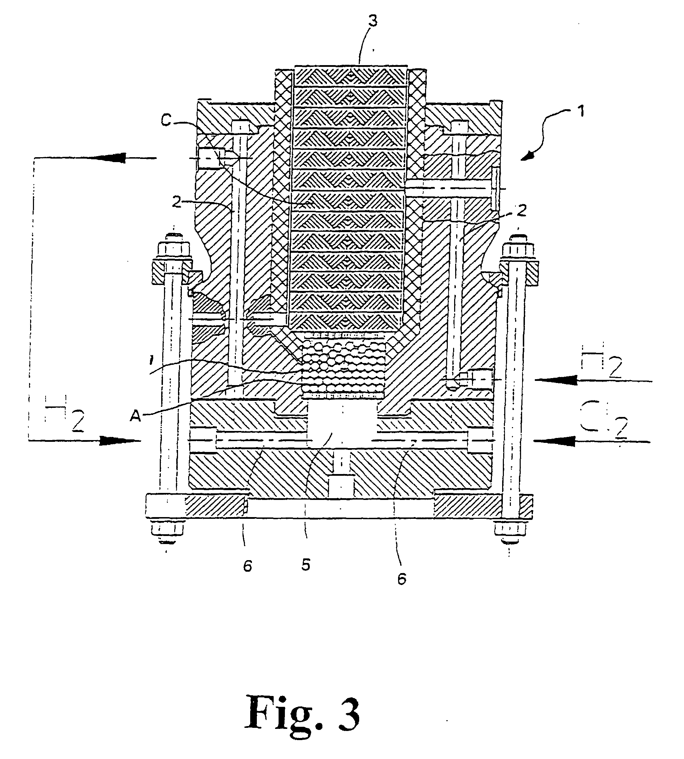

In einem Unterteil 4 befinden sich Gaseintrittskanäle 6, die tangential in die Vormischkammer 5 münden, wie es auch in Fig. 3a im einzelnen gezeigt ist. Aufgrund der tangentialen Zuführung erfolgt eine effektive Mischung durch Verwirbelung

An der Vormischkammer ist ferner ein Kondensatauslaß 7 vorgesehen, dessen Position je nach Einbaulage des Brenners 1 nach unten weisend festgelegt wird, damit Kondensat ablaufen kann. Die Vormischkammer 5 kann außerdem nach Bedarf statische Mischelemente 10 enthalten, wie sie im Detail in Fig. 1a als Ausschnitt der Fig. 1 zu sehen sind. Um die Reinigung zu vereinfachen, ist der Unterteil 4 mittels einer Befestigungseinrichtung 8 lösbar am Gehäuse des Porenbrenners 1 befestigt.

Um eine im wesentlichen adiabatische Verbrennung zu erreichen, ist der Brennraum C thermisch gegen die gekühlte Gehäusewand des Porenbrenners 1 mittels einer keramischen Isolierung 9 abgeschirmt. Am Gasaustritt 11 ist der Brennraum C mit einem Rost 12 abgedeckt, der verhindert, daß Füllkörper aus dem Porenbrenner 1 bei einem von der Senkrechten abweichenden Einbau herausfallen können. Ein weiterer Rost 13 zwischen den Zonen A und C verhindert, daß kleine Füllkörper der Zone A in die Zwischenräume der Füllkörper der Zone C geblasen werden. Der ebenfalls in Fig. 1 zu sehende Rost 14 trennt die Vormischkammer 5 von der Zone A. In der Brennkammerwand des Porenbrenners 1 und der Isolierung 9 ist eine durchgehende Öffnung 15 zur Temperaturmessung und eine Öffnung 16 zur Zündung des Gemisches vorgesehen. Um die Flammentemperatur unter die maximale Temperatur zu senken, bei der die Kugeln 3 nicht schmelzen, wird der Vormischkammer ein zusätzliches Gas, wie Wasserdampf, Abgas aus der Verbrennung oder ein anderes Gas, zugeführt.

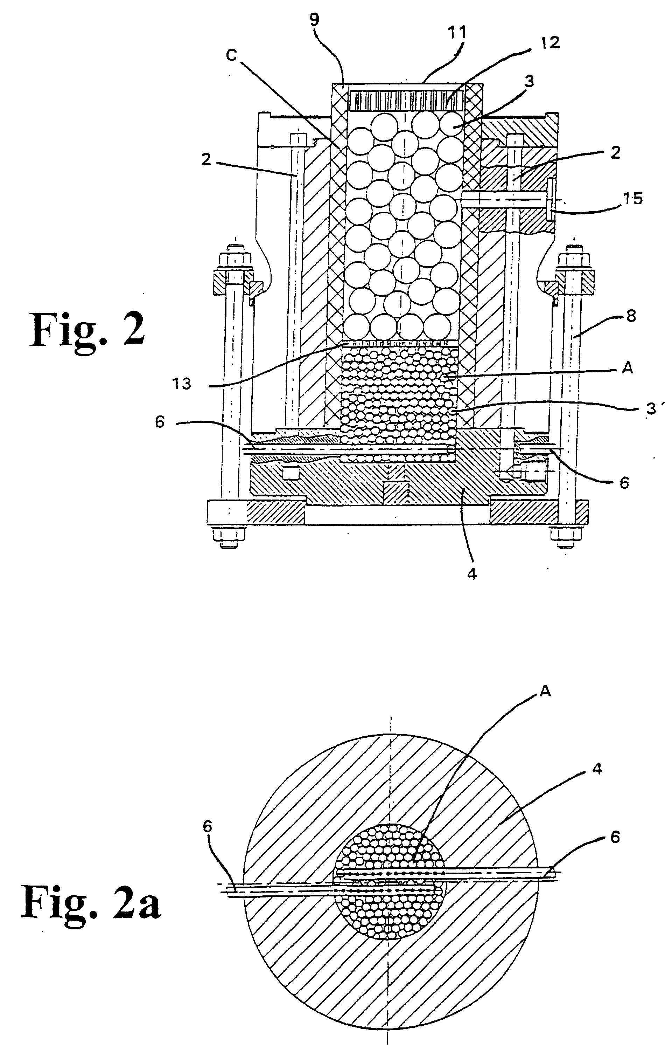

In Fig. 2 ist ein Porenbrenner 1 gezeigt, der in gleicher Weise wie der von Fig. 1 arbeitet. Im Unterschied zu demjenigen von Fig. 1 ist hier jedoch keine Vormischkammer vorgesehen. Die Gase werden mittels Leitungen 6 direkt in die Zone A eingeführt. Das Durchströmen der Zwischenräume zwischen den Kugeln 3' führt zu einer sehr gleichmäßigen Verteilung, so daß sich die über die Zuleitung 6 eingeführten Gase in der Zone A besonders gut mischen. Wie aus Fig. 2a zu erkennen ist. weisen die Zuleitungen 6 eine Vielzahl von Löchern auf, die hauptsächlich für eine Gleichverteilung am Boden des Porenbrenners 1 sorgen, und einen Flammrückschlag in die Leitungen 6 verhindern können, wenn sie klein genug dimensionniert sind.

Außerdem werden zwei der Verbrennungsgase, beispielsweise $Cl_2$ und $H_2$ in getrennten Leitungen 6 geführt, die in der Zone A lateral beabstander und von entgegengesetzten Seiten eingeführt sind, so daß sich in der Nähe der Hauptzuführung auch keine zufällige Mischung, beispielsweise aufgrund von Lecks ergeben kann, die irgendwo zu einer Explosion führen könnten.

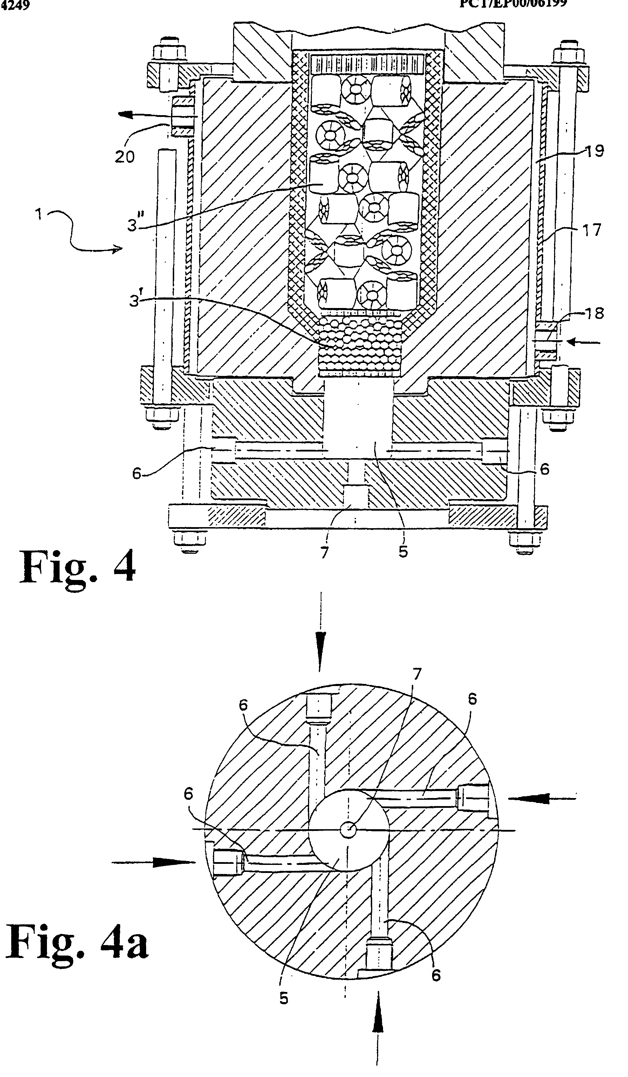

In Fig. 3 ist eine andere Ausführungform gezeigt, bei der die Brenngase selbst, z.B. Wasserstoff, für eine Kühlung und dementsprechende Wärmeabfuhr sorgen. Der Wasserstoff wird dazu zunächst durch Kühlkanäle der Brennkammerwand des Porenbrenners 1 geleitet, bevor er durch einen Eintrittskanal 6 im Unterteil 4 in die Vormischkammer eintritt, wie es durch die Pfeile auf der linken und rechten Seite von Fig. 3 angedeutet ist. Das Chlor tritt durch einen anderen Gaseintrittskanal 6 ein. Ein Fremdgas wird durch weitere Gaseintrittskanäle 6, wie es im Detail in Fig. 4a zu sehen ist, in die Vormischkammer 5 geblasen. In dieser Ausführungsform sollte die Auslegung der Isolierung der Wärmeaufnahmefähigkeit des Wasserstoffs angepaßt werden.

Der Brennraum C ist in diesem Beispiel mit einer strukturierten Packung 3" ausgefüllt, mit der die Durchmischung der Reaktionspartner gegenüber der Kugelpackung gemäß Fig. 1 verbessert wird. Solche Packungen 3" eignen sich besonders, für solche Fälle, in denen keine Feststoffe, wie Ruß, in den Gasen enthalten sind.

In Fig. 4 ist ein weiteres Ausführungsbeispiel eines Porenbrenners 1 gezeigt, der mittels einer Graphitwand, die von einem wassergekühlten Stahlmantel 17 umgeben ist, ummantelt ist. Die Graphitwand des Porenbrenners 1 benötigt unter anderem wegen der hohen Wärmeleitfähigkeit von Kohlenstoff in diesem Fall keine inneren Kühlkanäle.

Das Kühlwasser tritt am Stutzen 18 in den Mantelraum 19 des Stahlmantels 17 ein und verläßt diesen wieder durch einen Stutzen 20. Der in Fig. 4 dargestellte Porenbrenner 1 ist, um auch hier bezüglich der Zone C eine andere Ausbildung zu demonstrieren, mit keramischen Füllkörperringen 3''' ausgerüstet, die eine zylindrische Form mit inneren Strukturen aufweisen. Durch derartige Strukturen wird vor allen Dingen die Oberfläche gegenüber dem Beispiel von Fig. 1 erhöht.

Fig. 4a zeigt hier beispielhaft die Anordnung der Eintrittsstutzen 6 für die Vormischkammer 5. Vorzugsweise werden Brenngase und Inertgase in umfangsmäßig hintereinanderliegenden Eintrittstutzen 6 zugeführt, um die Flammgeschwindigkeit der Gemische herabzusetzen, z.B. Wasserstoff bei 6', Chlor bei 6" und Kreislaufgase bei 6'''. Kondensate können bei dem Stutzen 7 aus der Vormischkammer austreten.

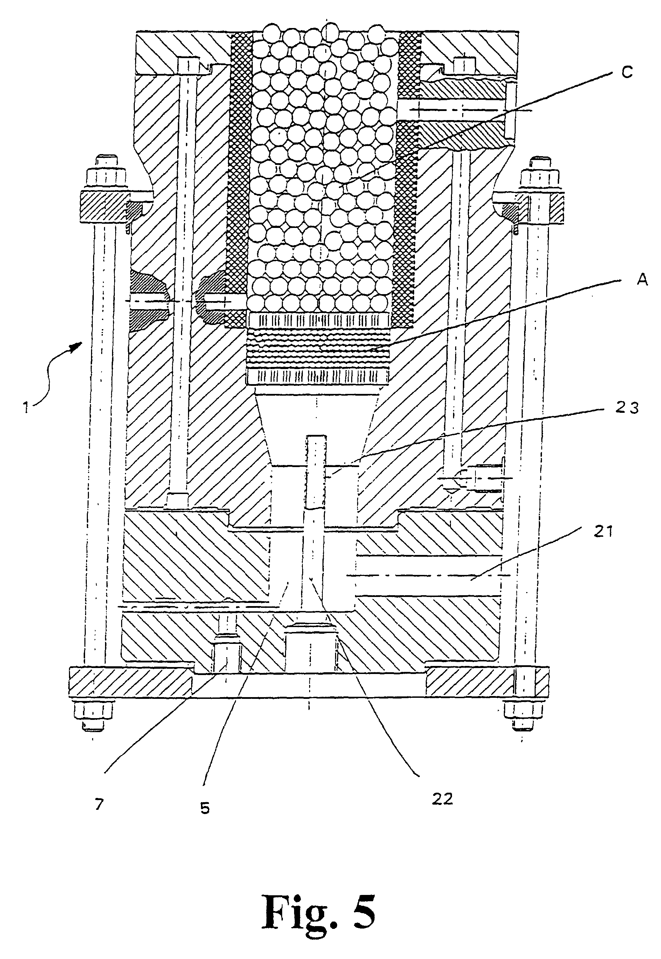

In Fig. 5 ist ein Porenbrenner 1 zur Nachverbrennung von chlorhaltigen Gasen gezeigt. Er unterscheidet sich von der in Fig. 1 beschriebenen Ausführungform durch eine modifizierte Vormischkammer 5, in die ein größer dimensionierter Gaseintrittskanal 21, durch den die vorgemischten Gase, Luft als Oxidationsmittel und Brennstoff strömen und ein in die Vormischkammer 5 ragendes Gaseinleitrohr 22, mündet, durch welches das nachzuverbrennende Abgas geführt wird. Das Gaseinleitrohr 22 ist an seiner Mantelfläche mit Bohrungen 23 versehen, durch die das nachzuverbrennende Abgas in die Vormischkammer 5 eintritt und sich mit dem Brenngasstrom, der um das Rohr strömt, vermischt. Der Kondensatauslaß 7 ist hier im Gegensatz zu den Darstellungen der Figuren 1-3 seitlich angeordnet. Die Vormischkammer 5 erweitert sich unterhalb der Zone A auf den gleichen Querschnitt wie denjenigen von Zone C Diese Erweiterung sorgt für eine Erhöhung der möglichen Gasbelastung des Brenners.

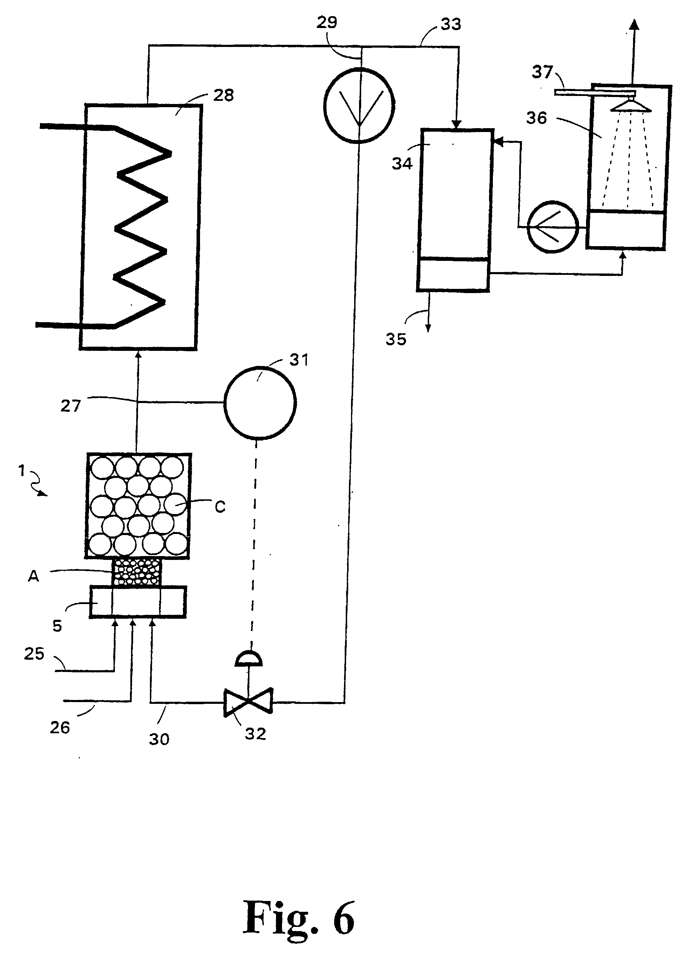

In Fig. 6 ist ein vereinfachtes Schema einer Anlage zur Erzeugung von Salzsäure, in der ein Porenbrenner 1 beispielsweise vom Typ gemäß Fig. 3 integriert ist, gezeigt. Die Brenngase Wasserstoff und Chlor werden dabei über Zuleitungen 25, 26 in einen Porenbrenner 1 eingespeist. Die Reaktionsprodukte gelangen von diesem zur Kühlung über eine Leitung 27 in einen Wärmetauscher 28. Der Wärmetauscher kann beipielsweise mit Kühlwasser gekühlt werden. Alternativ ist aber auch eine Wärmenutzung möglich, indem dort Heißwasser oder Niederdruckdampf zur weiteren Verwendung erzeugt wird.

Von den aus dem Wärmetauscher austretenden abgekühlten Gasen wird ein Teil über eine Leitung 29 abgezweigt und den Brennstoff/Oxidationsmittelgemisch über eine Zuführungsleitung 30 vor dem Brenner zugeführt. Die Temperaturregelung erfolgt über eine entsprechende Meßstelle 31 und ein temperaturgeregeltes Ventil 32.

Der andere Teil der Gase gelangt über eine. Leitung 33 z.B. in einen Fallfilmabsorber 34, in dem Chlorwasserstoff in Wasser bzw. verdünnter Salzsäure absorbiert und aus dem Stutzen 35 entnommen wird. Der hier als Fallfilmabsorber 34 ausgebildete Wäscher kann im Gleichstrom, wie dargestellt, oder auch im Gegenstrom betrieben werden. Die nicht absorbierbaren Anteile und noch geringfügige Anteile an Chlorwasserstoff gelangen dann in einen Nachwäscher 36, in dem der restliche Anteil von Chlorwasserstoff mittels über die Leitung 37 zugeführtem Frischwasser ausgewaschen wird. Das mit Chlorwasserstoff angereicherte Waschwasser wird vorteilhaft als Absorptionsflüssigkeit für den Absorber verwendet und deswegen zurückgeführt.

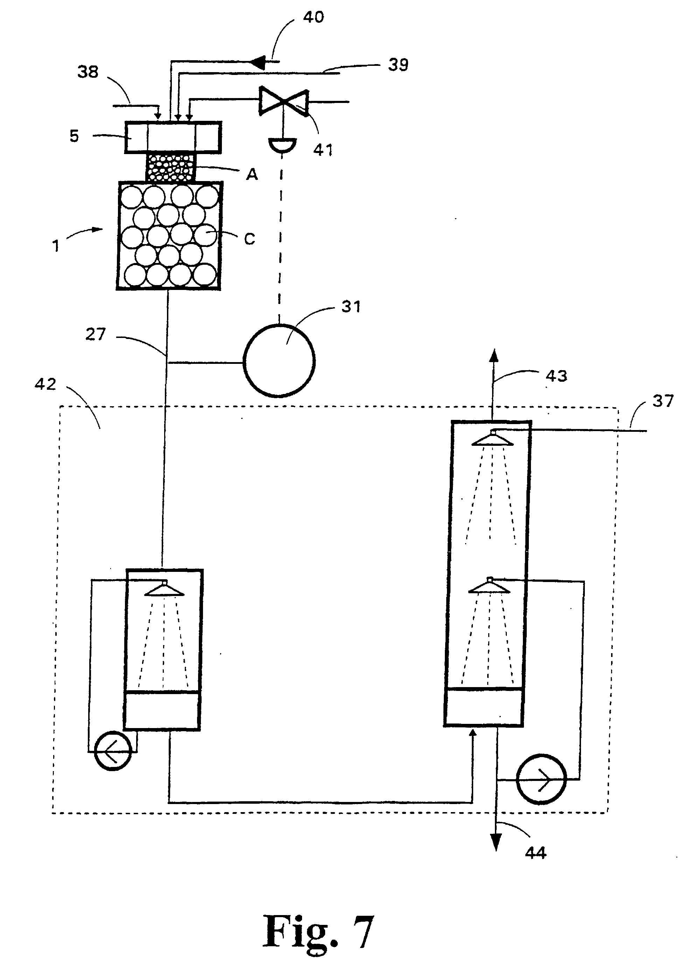

Fig. 7 zeigt eine weitere schematische Darstellung einer Anlage, die beispielsweise zur Nachverbrennung von chlorhaltigen Verbindungen und Abgasen mit geringem Chlorgehalt aus anderen Anlagen oder Anlageteilen einsetzbar ist.

Mittels einer Stützflamme aus über Leitungen 38 und 39 zugeführtem Erdgas und Luft wird ein über eine Leitung 40 zugeführtes Abgas mit beispielsweise chlorhaltigen Bestandteilen in einem Porenbrenner 1 nachverbrannt. Die Verbrennungstemperatur des Porenbrenners 1 wird in diesem Beispiel mit Hilfe von Zusatzluft über ein Ventile 41 geregelt, sofern die Kühlwirkung des über die Leitung 40 zugeführten nachzuverbrennenden Gases nicht ausreicht oder dieses einen zu berücksichtigenden Heizwert besitzt. Selbstverständlich können zur Temperaturregelung auch andere, beispielsweise inerte Gase oder Wasserdampf zugeführt werden, wenn die äußeren Randbedingungen dies erfordern. Ist die Verbrennungstemperatur niedriger als der vorgegebene Sollwert, muß die Wärmeleistung durch Zufuhr von Erdgas erhöht werden.

Die Abgase können einer Abwärmenutzung in einem hier nicht dargestellten Wärmetauscher zugeführt werden oder, wie es bei kleinen Anlagen häufig üblich ist, direkt gequencht werden. Nach der Quenche gelangen die abgeschreckten Gase in einen Wäscher 42, in dem die Abgase zunächst mit Umlaufflüssigkeit, dann mit über die Leitung 37 zugeführten Frischwasser nachgewaschen werden. Ein Teil des Waschwassers wird einer weiteren Aufbereitung unterzogen. Dies ist jedoch in der Zeichnung nicht dargestellt.

Gereinigtes Abgas entweicht aus einer Leitung 43, während verdünnte Salzsäure über eine Leitung 44 entnommen werden kann.

Die besonderen Vorteile eines Porenbrenners 1 in solchen Anlagen liegen in seiner hervorragenden Regelmöglichkeit der Verbrennungstemperatur und in seiner Verbrennungsstabilität. Auf plötzliche Änderungen in der Zusammensetzung des nachzuverbrennendes Abgases wirkt sich die stabilisierende Wirkung der heißen keramischen Materialien in der Zone C positiv aus. Die anderen Verbrennungsparameter wie Erdgas und Luftbedarf zur Aufrechterhaltung der Solltemperatur in der Verbrennungszone können schnell angepaßt werden, ohne daß die Verbrennung unterbrochen wird. Verbrennungstemperaturen bis 1600°C sind mit handelsüblichen Oxidkeramikmassen möglich.

Ergebnisse der Erprobung des beschriebenen Verfahrens und der dazu benutzten Vorrichtungen:

Beispiel 1:

Mit einem Porenbrenner 1 nach Fig. 1 in einer verfahrenstechnischen Pilotanlage gemäß Fig. 5 wurde aus Wasserstoff (1,12 m$^3$ /h) und Chlor (1,09 m$^3$ /h) Chlorwasserstoff erzeugt. Als Inertgasstrom, also als zusätzliches Gas zum Emiedrigen der Flammtemperatur, wurde in die Vormischkammer zusätzlich ca. 0,73 kg/h Wasserdampf eingeblasen. Bei einem stöchiometrischen Wasserstoffüberschuß von 3% wurde in der durch Verbrennen erzeugten Salzsäure von 30 Gew% HCl ein Gehalt an freiem Chlor von weniger als 3 ppm festgestellt.

Beispiel 2:

Ein Methylchlorid enthaltendes Abgas wurde in einem Porenbrenner 1 nach Fig. 5 in einer Anlage nach Fig. 7 in einer Stützflamme aus 0,17 m³/h Erdgas und 1,54 m³/h Luft nachverbrannt. Als Abgas wurde mit 0,35 m³/h ein Nachverbrennungsgas mit ca. 0,1% Methylchlorid in Luft eingeleitet. Die Temperatur des aus dem Porenbrenner entweichenden Abgases lag bei ca. 1100°C. Der Gehalt an Methylchlorid im Abgas war kleiner als 12 ppm.

Beispiel 3:

Ein Versuch mit einer Anlage nach Fig. 6 und einem Porenbrenner 1 gemäß Fig. 1 ergab für die Verbrennung von 0,12 m³/h Chlor mit 0.2 m³/h Erdgas (Methan) und 2,8 m³/h Luft folgende Ergebnisse: Es wurde rußfreie 30%ige Salzsäure erzeugt. Der Kohlenmonoxidgehalt im Abgas war dabei kleiner als 0,5%. Nebenprodukte wie polychlorierte Dioxine und Furane konnten weder in der Säure noch im Abgas nachgewiesen werden. Der Chlorgehalt in der Säure war geringer als 50 ppm.

Unter ungünstigen Randbedingungen könnte das Abgas mit einer Vorrichtung nach Fig. 5 mit hohem Luftüberschuß nochmals nachverbrannt werden.

Beispiel 4:

Weiter wurden Versuche mit stark abgesenkter Brennraumtemperatur in einem Brenner gemäß Fig. 1 durchgeführt. Mit 1,06 m³/h Wasserstoff, 1,04 m³/h Chlor und 1,02 kg/h Wasserdampf ergab sich selbst bei einer geringen Brennraumtemperatur von ∼600°C nur ein kleiner Chlorgehalt in der gewonnenen Säure von kleiner als 3 ppm.

Wie die Beispiele zeigen, ermöglichen es die oben genannten Brennertypen in einfacher Weise stark exotherme chemische Reaktionen sowohl auf kleinen Volumen als auch im Wesentlichen adiabatisch zu führen. Sicherheitsvorschriften können auf einfache Weise eingehalten werden. Damit erweist sich der hier beschriebene Brennertyp in allen Anforderungen den herkömmlichen Brennern für stark exotherme chemische Reaktionen überlegen.

**Patentansprüche**

1. Verfahren für einen Brenner zur Verbrennung eines Brennstoff/Oxidationsmittelgemisches (1) innerhalb eines Brennraumes, in dem ein Material (3, 3', 3", 3'") vorgesehen ist, das einer maximalen Temperatur standhält, die kleiner als die Verbrennungtemperatur des Brennstoff/Oxidationsmittelgemisches ist, **dadurch gekennzeichnet, daß** vor Verbrennung ein zusäzliches Gas zugeführt wird, das nicht wesentlich zur Verbrennung beiträgt, wie ein Inertgas oder Wasserdampf oder das Abgas aus der Verbrennung oder einer Nachverbrennung, mit dem die Temperatur während der Verbrennung auf einen Wert unterhalb der maximalen Temperatur herabgesetzt wird.

2. Verfahren nach Anspruch 1, **dadurch gekennzeichnet, daß** das Brennstoff/Oxidationsmittelgemisch und das zusätzlich zugeführte Gas zumindest teilweise in einer Vormischeinrichtung (5) gemischt werden, die dem Brenner (1) vorgeschaltet ist.

3. Vorrichtung mit einem Brenner zur Verbrennung eines Brennstoff/Oxidationsmittelgemisches innerhalb eines Brennraums, in dem ein Material (3, 3', 3", 3'") vorgesehen ist, das einer maximalen Temperatur standhält, mit einer oder mehreren Zuführungsleitungen (25, 26) für den Brennstoff sowie für das Oxidationsmittel, um sie in den Brennraum einzuleiten, **dadurch gekennzeichnet, daß** diese Vorrichtung für die Verbrennung mit einer Verbrennungstemperatur des Brennstoff/Oxidationsmittelgemisches oberhalb der maximalen Temperatur dadurch ausgelegt ist, daß mindestens eine weitere Zuleitung (30) vorgesehen ist, über die dem Brennraum ein zusäztliches Gas, insbesondere niederen Brennwertes, zuführbar ist, mit dem die Temperatur bei der Verbrennung auf einen Wert unterhalb der maximalen Temperatur absenkbar ist.

4. Vorrichtung nach Anspruch 3, **dadurch gekennzeichnet, daß** das Verbrennungsprodukt aus dem Brennraum zumindest teilweise über eine Zuleitung (30) als zusätzliches Gas, mit dem die Temperatur bei der Verbrennung absenkbar ist, eingeleitet ist.

5. Vorrichtung nach Anspruch 3 oder 4, **dadurch gekennzeichnet, daß** eine Vormischkammer (5) für das Brennstoff/Oxidationsmittelgemisch vorgesehen ist, in welcher der Brennstoff und das Oxidationsmittelgemisch vor der Verbrennung mischbar sind.

6. Vorrichtung nach Anspruch 5, **dadurch gekennzeichnet, daß** die Vormischkammer (5) so ausgelegt ist, daß die in Richtung auf den Brennraum bezogene Komponente der Strömungsgeschwindigkeit des Gemisches in der Vormischkammer (5) größer als die Flammengeschwindigkeit im Brennraum ist.

7. Vorrichtung nach Anspruch 5 oder 6, **dadurch gekennzeichnet, daß** der Vormischkammer (5) auch das zusätzliche Gas, mit dem die Verbrennungstemperatur herabsetzbar ist, zugeführt ist, um es mit dem Brennstoff/Oxidationsmittel zu vermischen, vorzugsweise durch Mischen mit dem Brennstoff oder dem Oxidationsmittel vor der Vormischkammer (5).

8. Vorrichtung nach einem der Ansprüche 5 bis 7, **dadurch gekennzeichnet, daß** die Seitenfläche im Verhältnis zum Volumen der Vormischkammer (5) so groß gewählt ist, daß gegebenenfalls die freie Energie einer Verpuffung von der Seitenwand aufnehmbar ist.

9. Vorrichtung nach mindestens einem der Ansprüche 5 bis 8, **gekennzeichnet durch** eine Kühlung der Vormischkammer (5).

10. Vorrichtung nach einem der Ansprüche 3 bis 9, **dadurch gekennzeichnet, daß** in der Brennkammer ein poröses Material (3, 3', 3", 3''') mit zusammenhängenden, für eine Flammenentwicklung geeignet großen Hohlraumen vorgesehen ist.

11. Vorrichtung nach Anspruch 10, **gekennzeichnet durch** ein poröses Material (3, 3', 3", 3''') mit zusammenhängenden Hohlräumen, dessen Porosität sich in Richtung der Flammenentwicklung zu größeren Poren ändert, wobei sich an einer inneren Grenzfläche für die Porengröße eine kritische Péclet-Zahl ergibt, oberhalb der die Flammenentwicklung erfolgt und unterhalb der sie unterdrückt ist.

12. Vorrichtung nach Anspruch 11, **dadurch gekennzeichnet, daß** der Brennraum mindestens zwei Zonen (A, C) mit Material (3, 3', 3", 3''') unterschiedlicher Porengröße aufweist, zwischen denen die Porengröße die kritische Péclet-Zahl ergibt.

13. Vorrichtung nach einem der Ansprüche 10 bis 12, **dadurch gekennzeichnet, daß** das Material (3, 3', 3", 3''') mit zusammenhängenden Hohlräumen zumindest teilweise eine Schüttung von Körpern aufweist, wie sie für Füllkörperschüttungen oder geordnete Packungen bei thermischen Trennverfahren eingesetzt werden, wie Kugeln oder Sattelkörper.

14. Vorrichtung nach Anspruch 13 mit einer Grenzfläche für Zonen unterschiedlicher Porösitat nach Anspruch 12, **dadurch gekennzeichnet, daß** an der Grenzfläche ein Gitter, wie ein Rost (13), vorgesehen ist, um einen Austrag der Körper aus einer Zone in die andere zu verhindern.

15. Vorrichtung nach Anspruch 14, **dadurch gekennzeichnet, daß** das Gitter, insbesondere der Rost (13), gekühlt ist.

16. Vorrichtung nach mindestens einem der Ansprüche 3 bis 15, **dadurch gekennzeichnet, daß** die Brennkammer für Flammenstabilität bei Über- und/oder Unterdruck ausgelegt ist.

17. Vorrichtung nach mindestens einem der Ansprüche 1 bis 16, **dadurch gekennzeichnet, daß** eine Brennkammerisolierung (9) für eine annähernd adiabatische Verbrennungsführung ohne thermische Wandeffekte vorgesehen ist.

18. Vorrichtung nach einem der Ansprüche 1 bis 17, **gekennzeichnet durch** eine Einrichtung zur Gewinnung oder Trennung von Reaktionsprodukten aus dem verbrannten Brennstoff/Oxidationsmittel.

19. Vorrichtung nach Anspruch 18, **dadurch gekennzeichnet, daß** sie für Chlor oder eine chlorhaltige Verbindung sowie Wasserstoff oder eine wasserstoffhaltige Verbindung im Brennstoff/Oxidationsmittelgemisch zum Gewinnen von Chlorwasserstoff durch Verbrennung ausgelegt ist und daß sie eine verfahrenstechnische Einrichtung zur Gewinnung von Chlorwasserstoff oder Salzsäure hinter dem Brennraum aufweist.

20. Verwendung einer der Vorrichtungen nach Anspruch 3 bis 19 und/oder Anwendung des Verfahrens nach Anspruch 1 oder 2 zur Reinigung von Abgasen.

**Claims**

1. Method for a burner for the combustion of a fuel/oxidant mixture (1) within a combustion space, in which is provided a material (3, 3', 3", 3''') withstanding a maximum temperature which is lower than the combustion temperature of the fuel/oxidant mixture, **characterized in that**, prior to combustion, an additional gas, which does not contribute appreciably to combustion, is supplied, such as an inert gas or steam or the exhaust gas from combustion or from postcombustion, by means of which gas the temperature during combustion is lowered to a value below the maximum temperature.

2. Method according to Claim 1, **characterized in that** the fuel/oxidant mixture and the additionally supplied gas are mixed at least partially in a premixing device (5) which precedes the burner (1).

3. Device with a burner for the combustion of a fuel/oxidant mixture within a combustion space, in which is provided a material (3, 3', 3", 3''') withstanding a maximum temperature, with one or more supply lines (25, 26) for the fuel and for the oxidant, in order to introduce them into the combustion space, **characterized in that** this device is designed for combustion with a combustion temperature of the fuel/oxidant mixture above the maximum temperature, **in that** at least one further delivery line (30) is provided, via which the combustion space can have supplied to it an additional gas, in particular with a lower calorific value, by means of which the temperature during combustion can be lowered to a value below the maximum temperature.

4. Device according to Claim 3, **characterized in that** the combustion product from the combustion space is introduced at least partially, via a delivery line (30), as additional gas, by means of which the temperature during combustion can be lowered.

5. Device according to Claim 3 or 4, **characterized in that** a premixing chamber (5) for the fuel/oxidant mixture is provided, in which the fuel and the oxidant mixture can be mixed prior to combustion.

6. Device according to Claim 5, **characterized in that** the premixing chamber (5) is designed in such a way that that component of the flow velocity of the mixture in the premixing chamber (5) which is in the direction of the combustion space is greater than the flame velocity in the combustion space.

7. Device according to Claim 5 or 6, **characterized in that** the additional gas, by means of which the combustion temperature can be lowered, is also supplied to the premixing chamber (5), in order to mix the said gas with the fuel/oxidant, preferably by mixing with the fuel or with the oxidant upstream of the premixing chamber (5).

8. Device according to one of Claims 5 to 7, **characterized in that** the size of lateral area in relation to the volume of the premixing chamber (5) is selected such that, if appropriate, the free energy of a detonation can be absorbed by the side wall.

9. Device according to at least one of Claims 5 to 8, **characterized by** a cooling of the premixing chamber (5) .

10. Device according to one of Claims 3 to 9, **characterized in that** a porous material (3, 3', 3", 3''') with interconnected voids of a size suitable for flame development is provided in the combustion chamber.

11. Device according to Claim 10, **characterized by** a porous material (3, 3', 3", 3''') with interconnected voids, the porosity of which changes to larger pores in the direction of flame development, there being obtained for the pore size, at an inner interface, a critical Péclet number, above which flame development takes place and below which it is suppressed.

12. Device according to Claim 11, **characterized in that** the combustion space has at least two zones (A, C) with material (3, 3', 3", 3''') of different pore size, between which the pore size gives the critical Peclet number.

13. Device according to one of Claims 10 to 12, **characterized in that** the material (3, 3', 3", 3''') with interconnected voids has at least partially a heap of bodies, such as are used for filler beds or ordered packings in thermal separation methods, such as balls or saddle-shaped bodies.

14. Device according to Claim 13, with an interface for zones of different porosity according to Claim 12, **characterized in that** a grid, such as a grate (13), is provided at the interface, in order to prevent a discharge of the bodies from one zone into the other.

15. Device according to Claim 14, **characterized in that** the grid, in particular the grate (13), is cooled.

16. Device according to at least one of Claims 3 to 15, **characterized in that** the combustion chamber is designed for flame stability at overpressure and/or underpressure.

17. Device according to at least one of Claims 1 to 16, **characterized in that** a combustion-chamber insulation (9) for approximately adiabatic combustion management without thermal wall effects is provided.

18. Device according to one of Claims 1 to 17, **characterized by** a device for recovering or separating reaction products from the burnt fuel/oxidant.

19. Device according to Claim 18, **characterized in that** it is designed for chlorine or a chlorine-containing compound and hydrogen or a hydrogencontaining compound in the fuel/oxidant mixture for the recovery of hydrogen chloride by combustion, and **in that** it has a chemical engineering device for the recovery of hydrogen chloride or hydrochloric acid downstream of the combustion space.

20. Use of one of the devices according to Claim 3 to 19 and/or application of the method according to Claim 1 or 2 for the purification of exhaust gases.

**Revendications**

1. Procédé pour un brûleur destiné à la combustion d'un combustible / mélange oxydant (1) dans une chambre de combustion, dans laquelle est prévu un matériau (3, 3', 3", 3''') qui résiste à une température maximale qui est inférieure à la température de combustion du combustible /mélange oxydant, **ca-**

**ractérisé en ce que**, avant la combustion, il est injecté un gaz supplémentaire qui ne contribue pas sensiblement à la combustion, tel qu'un gaz inerte ou de la vapeur d'eau ou l'effluent gazeux provenant de la combustion ou d'une postcombustion, avec lequel la température est réduite pendant la combustion à une valeur située au-dessous de la température maximale.

2. Procédé selon la revendication 1, **caractérisé en ce que** le combustible / mélange oxydant et le gaz supplémentaire injecté sont mélangés, au moins partiellement, dans un dispositif de prémélange (5) placé en amont du brûleur (1).

3. Dispositif comportant un brûleur destiné à la combustion d'un combustible / mélange oxydant dans une chambre de combustion, dans laquelle est prévu un matériau (3, 3', 3'', 3''') qui résiste à une température maximale, comportant une ou plusieurs conduites d'amenée (25, 26) pour l'introduction du combustible ainsi que du mélange oxydant dans la chambre de combustion, **caractérisé en ce que** ce dispositif est conçu pour la combustion du combustible / mélange oxydant à une température de combustion qui est supérieure à la température maximale, et il est prévu au moins une autre conduite d'alimentation (30) par l'intermédiaire de laquelle un gaz supplémentaire, notamment un gaz à faible pouvoir calorifique, peut être amené dans la chambre de combustion, avec lequel la température peut être réduite lors de la combustion à une valeur située au-dessous de la température maximale.

4. Dispositif selon la revendication 3, **caractérisé en ce que** le produit de combustion provenant de la chambre de combustion est injecté, au moins partiellement, en tant que gaz supplémentaire par l'intermédiaire d'une conduite d'alimentation (30), avec lequel la température peut être réduite lors de la combustion.

5. Dispositif selon la revendication 3 ou 4, **caractérisé en ce qu'**il est prévu une chambre de prémélange (5) pour le combustible / mélange oxydant, dans laquelle le combustible et le mélange oxydant peuvent être mélangés avant la combustion.

6. Dispositif selon la revendication 5, **caractérisé en ce que** la chambre de prémélange (5) est conçue de telle sorte que, par rapport à la direction de la chambre de combustion, la composante de la vitesse d'écoulement du mélange dans la chambre de prémélange (5) soit supérieure à la vitesse de flamme dans la chambre de combustion.

7. Dispositif selon la revendication 5 ou 6, **caractérisé en ce que** le gaz supplémentaire, avec lequel la température de combustion peut être réduite, est également injecté dans la chambre de prémélange (5) afin de le mélanger avec le combustible / mélange oxydant, de préférence par un mélange avec le combustible ou le mélange oxydant en amont de la chambre de prémélange (5).

8. Dispositif selon l'une quelconque des revendications 5 à 7, **caractérisé en ce que**, rapportée au volume de la chambre de prémélange (5), la surface latérale est choisie avec une grandeur telle que l'énergie libre d'une déflagration peut être, le cas échéant, absorbée par la paroi latérale.

9. Dispositif selon l'une au moins des revendications 5 à 8, **caractérisé par** un refroidissement de la chambre de prémélange (5).

10. Dispositif selon l'une quelconque des revendications 3 à 9, **caractérisé en ce qu'**un matériau poreux (3, 3', 3' , 3' ' ') avec de grands espaces creux communicants, qui sont appropriés pour un développement de flamme, est prévu dans la chambre de combustion.

11. Dispositif selon la revendication 10, **caractérisé par** un matériau poreux (3, 3', 3'', 3''') avec des espaces creux communicants, dont la porosité se transforme en pores plus importants dans le sens du développement de flamme, un nombre critique de Péclet pour la grosseur des pores étant obtenu au niveau d'une surface limite intérieure, au-delà duquel a lieu un développement de flamme et au-dessous duquel il est supprimé.

12. Dispositif selon la revendication 11, **caractérisé en ce que** la chambre de combustion comporte au moins deux zones (A, C) avec du matériau (3, 3', 3'', 3''') de différentes grosseurs de pores, entre lesquelles la grosseur des pores conduit au nombre critique de Péclet.

13. Dispositif selon l'une quelconque des revendications 10 à 12, **caractérisé en ce que** le matériau (3, 3', 3'', 3''') avec des espaces creux communicants comporte, au moins partiellement, un garnissage de corps tels que ceux qui sont utilisés pour des garnissages de corps de remplissage ou des garnitures ordonnées en matière de procédés de séparation thermique, tels que des billes ou des selles de remplissage.

14. Dispositif selon la revendication 13, comportant une surface limite pour des zones de différentes porosités selon la revendication 12, **caractérisé en ce qu'**un treillis, tel qu'une grille (13), est prévu au niveau de la surface limite afin d'empêcher une migration des corps d'une zone vers l'autre.

**15.** Dispositif selon la revendication 14; **caractérisé en ce que** le treillis, notamment la grille (13), est refroidi.

**16.** Dispositif selon l'une au moins des revendications 3 à 15, **caractérisé en ce que** la chambre de combustion est conçue pour une stabilité de flamme lors d'une surpression et/ou d'une dépression.

**17.** Dispositif selon l'une au moins des revendications 1 à 16, **caractérisé en ce qu'**il est prévu une isolation (9) de chambre de combustion pour une conduite de flamme approximativement adiabatique sans effets de paroi thermiques.

**18.** Dispositif selon l'une au moins des revendications 1 à 17, **caractérisé par** un dispositif destiné à la récupération ou à la séparation de produits de réaction provenant du combustible / mélange oxydant brûlé.

**19.** Dispositif selon la revendication 18, **caractérisé en ce qu'**il est conçu, pour du chlore ou un composé chloré ainsi que pour de l'hydrogène ou un composé hydrogéné contenu dans le combustible / mélange oxydant, pour la récupération de gaz chlorhydrique par combustion, et **en ce qu'**il comporte un dispositif de technique de procédé pour la récupération de gaz chlorhydrique ou d'acide chlorhydrique en aval de la chambre de combustion.

**20.** Utilisation de l'un des dispositifs selon l'une quelconque des revendications 3 à 19 et/ou mise en oeuvre du procédé selon la revendication 1 ou 2 pour l'épuration d'effluents gazeux.

Fig. 1

Fig. 1a

Fig. 2

Fig. 2a

Fig. 3

# Fig. 4

# Fig. 4a

**Fig. 5**

**Fig. 6**

**Fig. 7**